# EUROPEAN PATENT APPLICATION

(11) **EP 4 603 958 A1**
(43) Date of publication of application: **20.08.2025**
(21) Application number: 23891877.5
(22) Date of filing: 01.11.2023
(51) Int. Cl.: G06F 3/0487, G06F 3/0481, G06F 3/0484

(54) **DISPLAY DEVICE FOR NAVIGATING WEBPAGE AND METHOD THEREOF**

(30) Priority: 17.11.2022 KR 20220154673
(71) Applicant: Samsung Electronics Co., Ltd., Suwon-si, Gyeonggi-do 16677 (KR)
(72) Inventor: KIM, Yangsoo, Suwon-si Gyeonggi-do 16677 (KR)
(74) Representative: Walaski, Jan Filip
(86) International application number: PCT/KR2023/017272
(87) International publication number: WO 2024/106810

(57) **Abstract**

Various embodiments disclosed herein relate to a method for navigating a webpage in a display device and a device therefor. The method according to an embodiment comprises the steps of: displaying a webpage through a web browser; setting the navigation mode to one of a plurality of navigation modes on the basis of at least one of a loading state of the web page or a hypertext markup language (HTML) element of the web page; and navigating a graphic user interface (GUI) on the web page on the basis of direction information and the set navigation mode in response to receiving, from an external device, a control signal having the direction information.

## Description

### [Technical Field]

The disclosure relates to display device and method for navigating a webpage.

### [Background Art]

A display device is a device that has the capability of displaying images. A user may control a display device by a remote control device. The display device may perform various control operations related to image display according to control signals received from the remote control device. Meanwhile, as technology has advanced, display devices come equipped with the capability of displaying webpages as well as images.

### [Detailed Description of the Invention]

### [Technical Solution]

The disclosure provides a display device and a navigating method capable of providing a navigation mode suitable for digital web content included on a webpage.

An aspect of the disclosure relates to a method for navigating a webpage on a display device. According to an embodiment, a method may include: displaying the webpage through a web browser; setting a navigation mode as any one of a plurality of navigation modes based on at least one of a loading state of the webpage and a hypertext markup language (HTML) element of the webpage; and navigating a graphic user interface (GUI) on the webpage based on the set navigation mode and direction information in response to receiving a control signal having the direction information from an external device.

According to an embodiment, the direction information may be identified based on a frequency value of the control signal. The control signal may be an electromagnetic wave in an infrared or near-infrared band.

According to an embodiment, the plurality of navigation modes may include two or more of a cursor navigation mode, a link navigation mode, or a scroll navigation mode.

According to an embodiment, the set navigation mode may be maintained as the cursor navigation mode while the webpage is being loaded.

According to an embodiment, the set navigation mode may be switched from the cursor navigation mode to the link navigation mode based on the loading of the webpage being completed.

According to an embodiment, may comprise identifying a type of one or more web contents included in the webpage from the HTML element; and setting the navigation mode as any one of the cursor navigation mode, the link navigation mode, or the scroll navigation mode based on the type of the one or more web contents.

According to an embodiment, the navigation mode may be set as the scroll navigation mode based on the type of the one or more web contents being an article.

According to an embodiment, the navigation mode may be set as the cursor navigation mode, based on the type of the one or more web contents being a video and the video being identified as being played back.

According to an embodiment, while the playback of the video is maintained, the navigation mode may be set as the cursor navigation mode, and the navigation mode may be restored to a previous navigation mode based on playback of the video being terminated. The previous navigation mode may be a navigation mode, among the plurality of navigation modes, prior to the cursor navigation mode is set.

According to an embodiment, the navigation mode may be set as the link navigation mode based on the type of the one or more web contents being an article and a video. The navigation mode may be switched from the link navigation mode to the cursor navigation mode based on the video being identified as being played back.

An aspect of the disclosure relates to a method for navigating a webpage on a display device. According to an embodiment, a method may include: displaying the webpage through a web browser; setting a navigation mode as any one of a plurality of navigation modes based on at least one of a loading state of the webpage, a hypertext markup language (HTML) element of the webpage, and a playback state of a video included in the webpage; and navigating a graphic user interface (GUI) on the webpage based on the set navigation mode and direction information in response to receiving a control signal having the direction information from an external device.

According to an embodiment, the direction information may be identified based on a frequency value of the control signal. The control signal may be an electromagnetic wave in an infrared or near-infrared band.

According to an embodiment, the plurality of navigation modes may include two or more of a cursor navigation mode, a link navigation mode, or a scroll navigation mode.

According to an embodiment, the navigation mode may be maintained as the cursor navigation mode while the webpage is being loaded.

According to an embodiment, the navigation mode may be switched from the cursor navigation mode to the link navigation mode, based on the loading the webpage being completed.

According to an embodiment, may comprise identifying a type of one or more web contents included in the webpage from the HTML element, and setting the navigation mode as any one of the cursor navigation mode, the link navigation mode, or the scroll navigation mode based on the type of the one or more web contents.

An aspect of the disclosure relates to a display device. A display device according to an embodiment may include one or more processors and memory storing a program executed by the one or more processors. The program may include instructions for each operation of the above-described methods. For example, the program may include one or more instructions for executing: displaying the webpage through a web browser; setting a navigation mode as any one of a plurality of navigation modes based on at least one of a loading state of the webpage and a hypertext markup language (HTML) element of the webpage; and navigating a graphic user interface (GUI) on the webpage based on the set navigation mode and direction information in response to receiving a control signal having the direction information from an external device.

According to an embodiment of the disclosure, a suitable navigation mode may be automatically set according to the type of a digital web content included in a webpage. Accordingly, the user may smoothly use webpages, which are typically suitable in a smartphone or PC environment, through TV devices.

Effects achievable in exemplary embodiments of the disclosure are not limited to the above-mentioned effects, but other effects not mentioned may be clearly derived and understood by one of ordinary skill in the art to which exemplary embodiments of the disclosure pertain, from the following description. In other words, unintended effects in practicing exemplary embodiments of the disclosure may also be derived by one of ordinary skill in the art from exemplary embodiments of the disclosure.

### [Brief Description of the Drawings]

FIG. 1 is a block diagram illustrating a display system;
FIG. 2 is a block diagram illustrating a display device;
FIG. 3 is a block diagram illustrating a remote control device;
FIG. 4 is a perspective view illustrating aa remote control device;
FIG. 5 is a flowchart illustrating a navigating method;
FIG. 6 is a reference view illustrating switching a navigation mode;
FIG. 7 is a reference view illustrating various navigation mode settings; and
FIGS. 8A and 8B are reference views illustrating a navigation mode setting according to a video execution state.

Reference may be made to the accompanying drawings in the following description, and specific examples that may be practiced are shown as examples within the drawings. Other examples may be utilized and structural changes may be made without departing from the scope of the various examples.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, in the drawings and relevant descriptions, descriptions of well-known functions and configurations may be omitted for clarity and brevity.

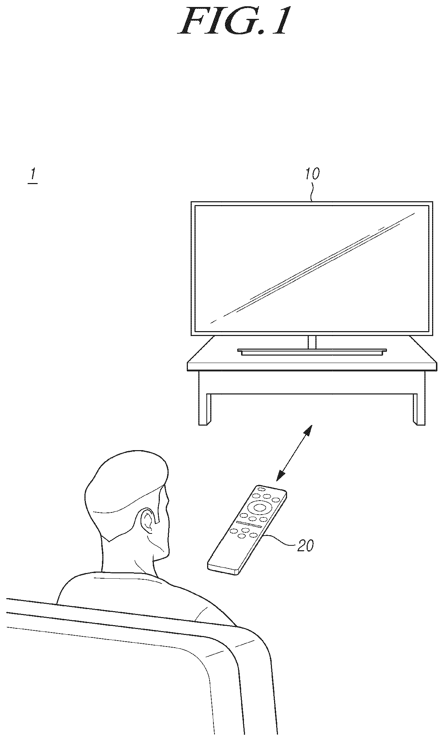

FIG. 1 is a block diagram illustrating a display system.

A display system 1 may include a display device 10 and a remote control device 20. The display device 10 means an electronic device having a video display function, and the remote control device 20 means an electronic device for remotely controlling the display device 10.

According to an embodiment, the display device 10 may be, e.g., a TV device, and the TV device may perform one or two or more control operations in response to a control signal provided from the remote control device 20. For example, the display device 10 may enable video display, adjust volume, change broadcast channels, or execute a program stored in memory according to reception of a control signal.

According to an embodiment, the remote control device 20 may transmit a control signal in an infrared or near-infrared wavelength band toward the display device 10. The control signal is not identified by the user because it does not fall within the wavelength band of visible light, and may be detected by a light sensor provided in the display device 10. If the display device 10 detects a control signal, it may perform a control operation corresponding to the detected control signal.

According to an embodiment, the remote control device 20 may include a plurality of physical key buttons. Each of the physical key buttons may be a signal having different frequency band. For example, a first key button may be a control signal of a first frequency band, and a second key button may be a control signal of a second frequency band.

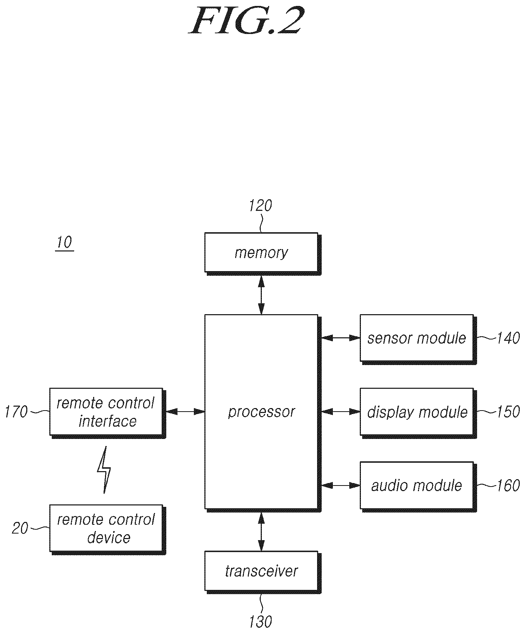

FIG. 2 is a block diagram illustrating a display device.

The display device 10 according to various embodiments of the disclosure may include a processor 110, memory 120, and a transceiver 130. The memory 120 and the transceiver 130 may be electrically or functionally connected to the processor 110. The processor 110 may control components constituting the display device 10 by generating and transmitting a control command.

According to various embodiments of the disclosure, the processor 110 may include a storage and processing circuit unit for supporting the operation of the display device 10. The storage and processing circuit unit may include storage, such as non-volatile memory (e.g., flash memory, or other electrically programmable ROM configured to form a solid state drive (SSD)) or volatile memory (e.g., static or dynamic RAM). The processing circuit unit in the processor 110 may be used to control the operation of the display device 10. The processing circuit unit may be based on one or more microprocessor(s), microcontroller(s), digital signal processor(s), baseband processor(s), power management section(s), audio chip(s), or application specific integrated circuit(s).

According to various embodiments of the disclosure, the memory 120 may include a memory area for one or more processors 110 for storing variables used in the protocol, configuration, control, and other functions of the display device 10, including operations corresponding to or including any one of the methods and/or procedures described as an example in the disclosure. Further, the memory 120 may include non-volatile memory, volatile memory, or a combination thereof. Further, the memory 120 may interface with a memory slot that enables insertion and removal of removable memory cards in one or more formats (e.g., SD card, Memory stick, compact flash, etc.).

According to various embodiments of the disclosure, the transceiver 130 may include a wireless communication module or an RF module. The wireless communication module may include, for example, Wi-Fi, BT, GPS or NFC. For example, the wireless communication module may provide a wireless communication function using a radio frequency. Additionally or alternatively, the wireless communication module may include a network interface or modem for connecting the display device 10 with a network (e.g., Internet, LAN, WAN, telecommunication network, cellular network, satellite network, POTS or 5G network). The RF module may be responsible for data transmission/reception, e.g., transmitting and receiving data RF signals or invoked electronic signals. As an example, the RF module may include, e.g., a power amp module (PAM), a frequency filter, or a low noise amplifier (LNA). The RF module may further include parts (e.g., conductors or wires) for communicating radio waves in a free space upon performing wireless communication.

In an embodiment, the display device 10 may include a sensor module 140. The sensor module 140 may, for example, measure a physical quantity or detect an operation state of the display device 10, and convert the measured or detected information into an electrical signal. The sensor module 140 may include at least one of, e.g., a gesture sensor, a gyro sensor, an atmospheric pressure sensor, a magnetic sensor, an acceleration sensor, a grip sensor, a proximity sensor, a color sensor, such as a red-green-blue (RGB) sensor, a bio sensor, a temperature/humidity sensor, an illumination sensor, or an ultra violet (UV) sensor. Additionally or alternatively, the sensing module 140 may include, e.g., an E-nose sensor, an electromyography (EMG) sensor, an electroencephalogram (EEG) sensor, an electrocardiogram (ECG) sensor, an infrared (IR) sensor, an iris sensor, or a finger print recognition sensor. The sensor module 140 may further include a control circuit for controlling at least one or more of the sensors included in the sensing module. According to some embodiment, the display device 10 may further include a processor 110 configured to control the sensor module 140 as part of the processor 110 or separately from the processor 110, and may control the sensor module 140 while the processor 110 is in a sleep mode. In the disclosure, "sensor module" may be used interchangeably with "sensor".

The display module 150 may include a panel, a hologram device, or a projector. The panel may be implemented, for example, to be flexible, transparent, or wearable. The panel and the touch panel may be configured in a single module. The hologram device may make three dimensional (3D) images in midair by using light interference. The projector may display an image by projecting light onto a screen. The screen may be positioned inside or outside the display module 150, for example. In accordance with an embodiment, the display module 150 may further include a control circuit to control the panel, the hologram device, or the projector. In the disclosure, "display module" may be used interchangeably with "display".

In an embodiment, the display device 10 may include an audio module 160. The audio module 160 may convert a sound into an electric signal or vice versa, for example. The audio module 160 may process sound information input or output through e.g., a speaker, a receiver, an earphone, or a microphone.

In an embodiment, the display device 10 may include a remote control interface 170. The remote control interface 170 may transmit the electrical signal received from the peripheral device (e.g., the remote control device 20) to the processor or transmit the electrical signal provided from the processor to the peripheral device. For example, the remote control interface 170 may perform reception processing on electrical signals received from peripheral devices or perform transmission processing on electrical signals to be transmitted to the peripheral devices based on various communication schemes such as Bluetooth, ultra-wideband (UWB), Zigbee, RF, or IR communication schemes.

Meanwhile, the display device 10 according to an embodiment may support the following navigation methods, using one or more processors 110 provided and other components described above (e.g., the sensor module 140, the display module 150, the audio module 160, the remote control interface 170, etc.).

In an embodiment, the processor 110 may display a webpage through a web browser. The webpage may include web content (e.g., articles, videos, etc.), but is not limited thereto. The article is an information creation composed of text and may be published over the Internet by an article provider. The video is an information creation composed of moving images and may be published through the Internet by a video provider. The user of the display device 10 may use web content (e.g., articles, video) provided from a web content provider through a webpage. For reference, the web content provider may provide the web content in the form of a service to various people through the Internet through its own server or other public servers.

The webpage may be configured based on a hypertext markup language (HTML) document, and accordingly, the webpage document may be understood as corresponding to the HTML document. An HTML element applied to various embodiments of the disclosure may be defined as being associated with at least one of insertion or output of web content. A description of the HTML element is described below.

The HTML document may contain various HTML elements. The HTML elements may include a head element and a body element. The head element may include a meta element as at least a portion. The head element, the body element, and the meta element may constitute at least a portion of the HTML document in the form of a tag.

Meanwhile, a meta tag refers to an HTML tag used for the purpose of specifying information about the webpage itself, not the web content contained in the webpage. Meta tags are generally marked up through the meta element of HTML and do not affect the web content of the webpage because they are placed under the head element in the HTML document.

In an embodiment, the processor 110 may identify, from the HTML element, the type of one or more web contents included in the webpage (e.g., article type, video type). In other words, processor 110 may identify web contents constituting the webpage from the HTML elements. Specifically, the processor 110 may identify web contents constituting the webpage using at least a portion of the meta element and/or body element constituting the HTML document. For example, if the code representing the article is identified from the tag (e.g., the meta property tag) that constitutes the meta element, the processor 110 may determine that the web content contains the article. For example, if the code representing the video is identified from the tag (e.g., the iframe tag, the video tag) associated with the insertion of the video that constitutes the body element, the processor 110 may determine that the web content contains the video.

In an embodiment, the processor 110 may set the navigation mode as any one of a plurality of navigation modes based on at least one of the loading state of the webpage and the HTML element of the webpage.

The loading state may include 'loading' and 'loading complete'. Loading refers to a state in which the processor 110 is loading the webpage through the web browser. Loading complete refers to a state in which the processor 110 has completed the loading of the webpage through the web browser.

The navigation mode refers to a method for moving a focus applied to a graphic user interface (GUI) element in response to the user input. The display device 10 according to various embodiments may process user inputs using the plurality of navigation modes.

In an embodiment, the navigation mode while the webpage is loading may be maintained or set as the cursor navigation mode. For example, while the webpage is loading, the navigation mode may be maintained or set first as the cursor navigation mode. Accordingly, while loading the webpage, the display device 10 may display the cursor together with the loading screen on the display. While maintained in the cursor navigation mode, if a control signal having direction information is received from the remote control device, the display device 10 may move the cursor being displayed on the display to correspond to the direction information. For example, if a control signal indicating the left direction is received from the remote control device, the display device 10 may move the cursor displayed on the display in the left direction. Here, each direction information may correspond to four directions (e.g., up, down, left and right) that may be manipulated through the direction key buttons of the remote control device. Here, the direction information for distinguishing the four directions may be distinguished based on the frequency value of the control signal. The control signal may be an electromagnetic wave in an infrared or near-infrared band. The remote control device may output an electromagnetic wave having a predetermined frequency value if a physical input to the key button is applied. In this case, the frequency value of the electromagnetic wave output for each key button may be designed differently. Electromagnetic waves transmitted in response to physical inputs to the key buttons may belong to an infrared or near-infrared wavelength band, but are not limited thereto.

In an embodiment, in response to the loading of the webpage, the navigation mode may be switched to or configured to the link navigation mode. For example, it operates in the cursor navigation mode while the webpage is loading, and in response to the completion of the loading of the webpage, the display device 10 may switch the navigation mode from cursor navigation mode to link navigation mode. The link navigation mode facilitates moving between various interaction elements constituting a webpage, but is difficult to use before the interaction elements are expressed on the webpage. According to various embodiments, by providing the cursor navigation mode until loading is completed and the link navigation mode after loading is completed, it is possible to enhance the poor user experience when using the webpage output on the display device 10 through the remote control device. For reference, the interaction element refers to a reactive graphic option, and each interaction element may be defined based on the DOM tree. A parent interaction element based on the DOM tree may be understood as a single cluster including child interaction elements.

On the other hand, after the webpage is loading, it may be set not only as the link navigation mode, but also as the same or different navigation modes (e.g., cursor navigation mode, scroll navigation mode) based on the type of web content constituting the webpage and the state of the web content. In this case, the type of web content may be identified from the HTML element, as described above. Hereinafter, a process of setting a navigation mode based on the type of web content constituting the webpage after the loading of the webpage is completed is described.

In an embodiment, the processor 110 may set the navigation mode as any one of a cursor navigation mode, a link navigation mode, and a scroll navigation mode based on the identified type of web content. Here, the type of web content may include an article type and a video type, but is not limited thereto. Further, setting the navigation mode as the link navigation mode by the processor 110 may be understood as maintaining the preset link navigation mode.

In an embodiment, in response to the webpage being identified as containing articles based on the HTML element, the processor 110 may set the navigation mode as the scroll navigation mode. Unlike other web contents, articles are provided for the purpose of reading content while moving along the scrolling direction. The link navigation mode may not realize a function of moving an area of the webpage displayed through the web browser of the webpage in the scrolling direction, but the display device 10 according to various embodiments automatically switches the link navigation mode to the scroll navigation mode, thereby enabling navigation suitable for articles.

Meanwhile, when the webpage includes video-type web content, the processor 110 may set the navigation mode based on the playback state of the video. The playback state of the video may include at least some of wait for playback, playing, pause, and playback complete. Wait for playback refers to a state before the video is played. Playing means a state in which the video is playing, and the video may be played in response to the user input or may be automatically played according to a predefined algorithm. Pause refers to a state in which the video being played is at least temporarily stopped. Playback complete means a state in which the playback of the video has been completed.

In an embodiment, the processor 110 may set the navigation mode to the cursor navigation mode in response to the webpage being identified as at least partially including the video based on the HTML element, and the video being identified as being played. For example, if the video constituting the webpage is played while the display device 10 is outputting the article, the navigation mode may be set by switching from scroll navigation mode to cursor navigation mode. For example, if the video constituting the webpage is played while the display device 10 is outputting a default webpage rather than an article, the navigation mode may be set by switching from link navigation mode to cursor navigation mode. For reference, the default webpage may be understood as another type of webpage in which the type of web content is not identified as an article, but is not limited thereto.

Further, in an embodiment, the navigation mode while video is maintained as playing may be set to the cursor navigation mode and, in response to the termination (or stop) of video playback, the navigation mode may be restored to a navigation mode (e.g., link navigation mode or scroll navigation mode) before it is set to the cursor navigation mode. For example, in response to the pause of playback of the video while playing the video, the processor 110 may restore the navigation mode to the previous navigation mode. Further, in response to the completion of the video playback, the processor 110 may restore the navigation mode to the previous navigation mode. The previous navigation mode may be recorded in the memory for at least temporarily or for at least a predetermined time, and may be read by the processor 110.

In an embodiment, the processor 110 may preferentially set the navigation mode as the link navigation mode in response to identifying that the webpage includes articles and videos based on the HTML element. As described above, the processor 110 may switch the navigation mode to the cursor navigation mode based on the video being identified as playing. For example, if the webpage contains both an article and a video, the video may be in any one state among wait for playback, playing, pause, and playback complete. The processor 110 may, preferentially set the navigation mode as the link navigation mode when identifying that the webpage includes a video from the HTML element, and subsequently set the navigation mode as the cursor navigation mode when a condition that the video is playing is met.

The large-screen display device 10 such as a TV is typically controlled using the remote control device rather than the user's touch input. The webpage is optimized for interaction through a touch screen or mouse device, and in particular, the multimedia application execution screen for playing video web content has a large number of interaction elements. If only the link navigation mode is applied to the execution screen in which a large number of interactive elements exist, the user should perform a significant number of direction button controls to focus on the interactive element to be selected, which may deteriorate the user's convenience and accessibility. The display device 10 according to an embodiment may automatically identify playback of video web content and switch the navigation mode to the cursor navigation mode, providing the user experience allowing the user to easily select the above-described interaction elements. For example, the user may easily select a target interaction element by moving the cursor represented on the display (by controlling the direction buttons) without the need to select a target interaction element sequentially via all the interaction elements in the execution screen where the plurality of interaction elements are present.

Meanwhile, in an embodiment, the processor 110 may navigate the graphic user interface on the webpage based on a preset navigation mode and direction information, in response to receiving a control signal having the direction information from the external device.

Here, the graphic user interface may include at least some of a cursor, a focus box, or a view area of the webpage (hereinafter, a view area). The cursor refers to a graphic element displayed on the display in the cursor navigation mode. The focus box refers to a box representation for discerning the interaction element focused on in the link navigation mode. The view area of the webpage is at least a portion of the webpage, and means one area viewed through the web browser.

Navigating the cursor means moving the cursor up, down, left, and right corresponding to direction information. Navigating the focus box means moving the focus applied to the first interaction element to the second interaction element positioned in the direction corresponding to the direction information. Navigating the view area means moving and displaying the displayed area of the webpage in the direction corresponding to the direction information.

In an embodiment, even if the same control signal is received from an external device (e.g., the remote control device), the user input may be processed differently for each navigation mode of the display device 10. For example, if a control signal with direction information is received while being set to the cursor navigation mode, the display device 10 may move the cursor displayed on the display corresponding to the direction information. For example, if a control signal with direction information is received while being set to the link navigation mode, the display device 10 may move the focus from the currently focused interaction element to another interaction element positioned corresponding to the direction information. For example, if a control signal with direction information is received while being set to the scroll navigation mode, the display device 10 may scroll the currently displayed webpage in the direction corresponding to the direction information. For reference, scrolling means moving and displaying the portion being represented by the display in the entire webpage to correspond to the scrolling direction.

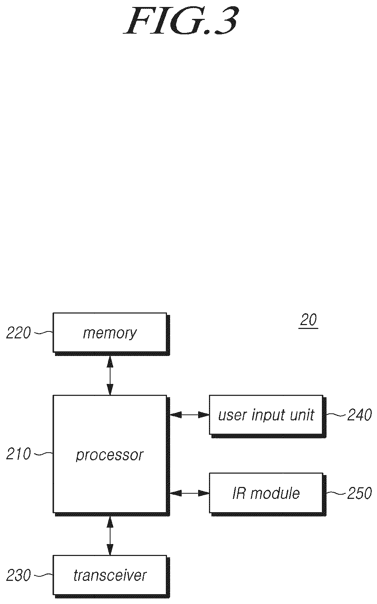

FIG. 3 is a block diagram illustrating a remote control device.

The remote control device 20 according to various embodiments of the disclosure may include a processor 210, memory 220, and a transceiver 230. The memory 220 and the transceiver 230 may be electrically or functionally connected to the processor 210. The processor 210 may control components constituting the remote control device 20 by generating and transmitting a control command. Here, the description of general functions of the processor 210, the memory 220, and the transceiver 230 may be understood as substantially the same as those described above with reference to FIG. 2.

In an embodiment, the remote control device 20 may include the user input unit 240. The user input unit 240 may include a keypad, a key button, a touch pad, or a touch screen, but is not limited thereto. If the user input is received through the user input unit 240, the processor 210 may generate a control signal to be provided to the display device 10. The control signal may be transmitted through the above-described transceiver or output in the form of an optical signal through the IR module 250 to be described below.

In an embodiment, the remote control device 20 may include an IR module 250. The IR module 250 may generate or output an infrared or near-infrared optical signal. The IR module may be provided on one side of the remote control device 20, and an optical signal may be radiated toward the provided direction.

Meanwhile, in an embodiment, the frequency band of the optical signal generated by the IR module 250 may be generated to correspond to a physical key button provided in the remote control device 20. The processor 210 may generate, for example, a first optical signal having a first frequency band if the user input to the first physical key button is applied, and a second optical signal having a second frequency band if the user input to the second physical key button is applied. As such, according to the type of the key button to which the user input (e.g., a physical input) is applied, the remote control device 20 may generate/output optical signals having various frequency bands, and the display device 10 receiving the same may discern the frequency bands to identify the physical key button to which the user input for the remote control device 20 has been applied.

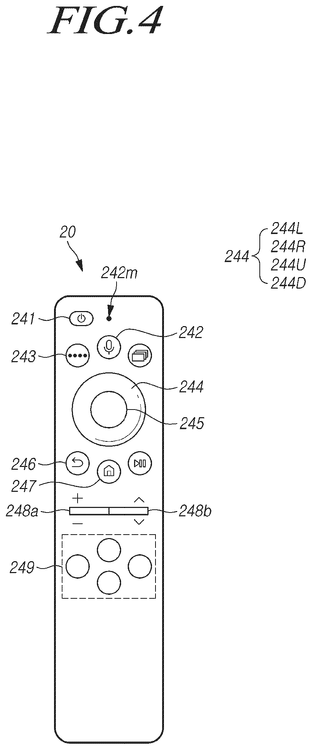

FIG. 4 is a perspective view illustrating aa remote control device.

Referring to FIG. 4, the remote control device 20 may include a housing and various types of key buttons. The housing may form the exterior of the remote control device 20. Various types of key buttons may be positioned in a plurality of areas, respectively, of the housing.

Various types of key buttons provided in the remote control device 20 may be classified according to functions. For example, the key buttons may include, but are not limited to, a power button 241, a voice recognition button 242, a virtual number pad call button 243, a direction button 244, a selection button 245, a return button 246, a home button 247, a volume button 248a, a channel button 248b, and an application execution button 249.

If a physical input to the power button 241 is applied, an optical signal (e.g., a near-infrared signal) for turning on or off the power of the display device (10 of FIG. 1) may be output.

If a physical input to the voice recognition button 242 is applied, the microphone 242m of the remote control device 20 may be switched to an enable state. For example, the enable state may be maintained while the physical input to the voice recognition button 242 is maintained. For example, the enable state may be maintained for a predetermined time from the time when the physical input to the voice recognition button 242 is applied. While the microphone 242m is maintained in the enable state, the remote control device 20 may receive the user's voice to obtain voice information. In an example, the obtained voice information may be transmitted to the display device (10 of FIG. 1) wirelessly connected to the remote control device 20, and the display device (10 of FIG. 1) may perform natural language processing on wirelessly received voice information. In an example, the remote control device 20 may perform natural language processing on the obtained voice information and transmit the natural language processing result to the display device (10 of FIG. 1).

If a physical input to the virtual number pad call button 243 is applied, the remote control device 20 may output an optical signal to enable the display device (10 of FIG. 1) to call the virtual number pad. The virtual number pad may be displayed on the display of the display device (10 of FIG. 1), and the user may select a number represented through the virtual number pad using the direction button 244 and the selection button 245.

The direction button 244 is a key button for receiving a four-key input to navigation on the graphical user interface. The four-key input means key inputs for up, down, left, and right movement. For example, the four-key input may include an upper key input, a lower key input, a left key input, and a right key input. To distinguish such a four-key input, the direction button 244 may include a left button 244L, a right button 244R, an upper button 244U, and a lower button 244D. Although not limited thereto, the direction button 244 may be provided to surround the selection button 245. Meanwhile, in the disclosure, the four-key input may be referred to as a direction input.

The selection button 245 is a key button for receiving the user input to selecting an object on the graphical user interface. For example, the user may navigate on the graphic user interface through the four-key input, and when a specific object on the graphic user interface is to be selected, the user may select the corresponding object through the selection input.

The return button 246 is a key button for instructing to return to the previous menu or the previous broadcast channel. If a physical input to the return button 246 is applied, the remote control device 20 may control the display device (10 of FIG. 1) to return to a previously displayed menu or a previously output broadcast channel.

The home button 247 is a key button for calling the home interface. The home interface refers to a user interface for performing various functions of the display device (10 of FIG. 1) such as display setting of the display device (10 of FIG. 1), external input setting, and execution of an installed application. The home interface may include graphic options corresponding to the respective functions as a component of the user interface.

The volume button 248a is a key button for adjusting the volume output through the audio module (e.g., speaker) of the display device (10 of FIG. 1). According to a physical input to the volume button 248a, the volume of the display device (10 of FIG. 1) may increase or decrease.

The channel button 248b is a key button for changing the broadcast channel output by the display device (10 of FIG. 1). The broadcast channel output by the display device (10 of FIG. 1) may be changed according to a physical input to the channel button 248b.

The application execution button 249 is a key button for immediately executing an application installed on the display device (10 of FIG. 1). For example, the application execution button 249 may be provided as a key button corresponding to an OTT application installed on the display device (10 of FIG. 1). The remote control device 20 may be provided with a first application execution button for executing a first OTT application and a second application execution button for executing a second OTT application, but is not limited thereto.

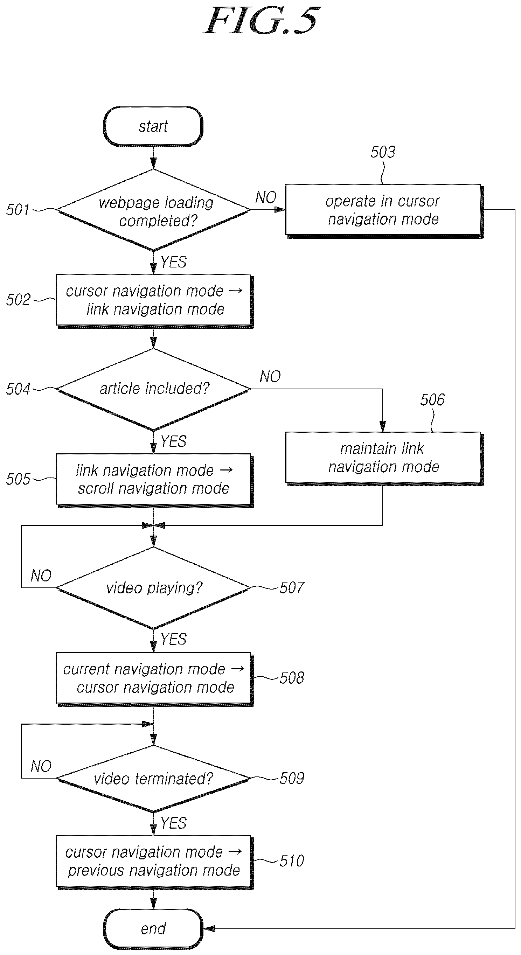

FIG. 5 is a flowchart illustrating a navigating method.

A control method performed by the display device (10 of FIG. 1 and 10 of FIG. 2) is described with reference to FIG. 5. Each operation of the control method may be performed by one or more processors provided in the display device. Further, the operation order of the control method is not limited to the order described or the order illustrated with reference to the drawings, and the order may be changed.

Referring to operation 501, the display device may identify the loading state of the webpage. The display device may display the webpage on the display through the web browser. The display device may output a webpage received through the transceiver through the web browser.

Referring to operation 502, the display device may identify the loading state of the webpage. The loading state may include 'loading' and 'loading complete'. Until of the webpage is completed, the display device may operate in the cursor navigation mode. In other words, while the webpage is loading, the display device may process a control signal received from the remote control device in the cursor navigation mode.

Referring to operation 502, when the loading of the webpage is completed, the display device may switch the navigation mode from the cursor navigation mode to the link navigation mode.

Referring to operation 503, until the loading of the webpage is completed, the display device may continue to operate so that the navigation mode remains as the cursor navigation mode.

Referring to operation 504, the display device may identify whether an article-type web content is included in the webpage. The article-type web content may be identified from the HTML element corresponding to the webpage. For example, if a meta element or body element that defines the type of content as an article is identified, the display device may determine the type of web content as an article.

Referring to operation 505, the display device may switch the navigation mode from the link navigation mode to the scroll navigation mode based on identifying that an article is included in the webpage.

Referring to operation 506, the display device may maintain the navigation mode as the link navigation mode based on identifying that an article is not included in the webpage.

Referring to operation 507, the display device may identify whether a video is present on the webpage, and further, whether the video is being played. For example, the display device may use HTML elements to identify whether there is a playable video on the webpage, and further identify the playback state of the video included in the webpage (e.g., wait for playback, playing, pause, or playback complete).

Referring to operation 508, the display device may switch the current navigation mode to the cursor navigation mode based on the video included in the webpage being identified as being played. Here, the current navigation mode may be, e.g., either the scroll navigation mode or the link navigation mode. When operation 505 leads to operation 507, the current navigation mode may be the scroll navigation mode. When operation 506 leads to operation 507, the current navigation mode may be the cursor navigation mode.

Meanwhile, regardless of the order shown, if the loading of the webpage is completed, the display device may set the navigation mode as the cursor navigation mode based on the playback state of the video constituting the webpage. For example, when the video constituting the webpage is set to be automatically played in response to the webpage being loaded, the display device may maintain the cursor navigation mode before loading without switching to another navigation mode.

Referring to operation 509, the display device may identify that the playback of the video is terminated(or stopped). For example, the display device may identify the termination of the playback based on the completion of the playback of the video. Further, the display device may identify that the playback of the video is paused in response to receiving the user input (e.g., a pause input) that controls the playback state of the video.

Referring to operation 510, the display device may restore the navigation mode to a previous navigation mode in response to the pause of the video playback. The previous navigation mode means the current navigation mode described above in operation 508.

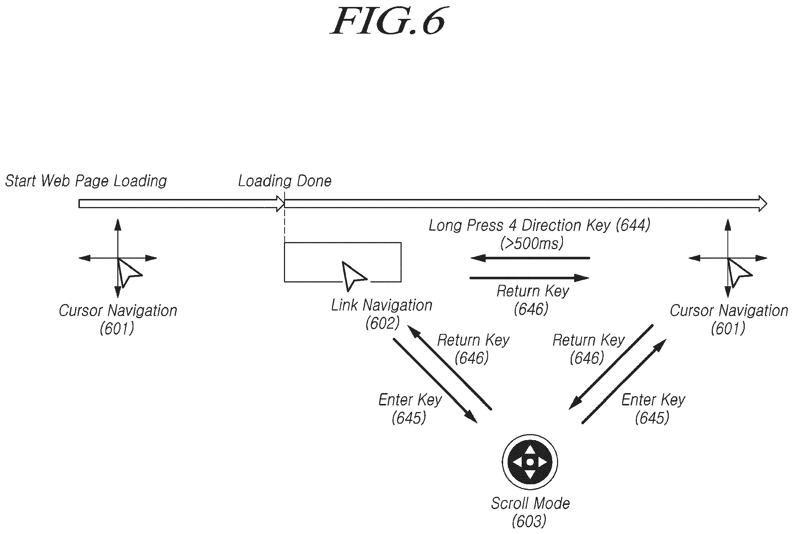

FIG. 6 is a reference view illustrating switching a navigation mode.

Referring to FIG. 6, the cursor navigation mode 601 may be applied while the webpage is loading. Further, in response to the completion of the loading of the webpage, the cursor navigation mode 601 may be switched to the same or different navigation mode (e.g., the link navigation mode 602 or the scroll navigation mode 603).

Meanwhile, the navigation mode may be switched regardless of at least one of the above-described loading state, HTML element, and video playback state.

In an embodiment, the navigation mode may be changed in response to receiving a predetermined key input from the remote control device. if a predetermined key input is received, the display device may determine that any one of a plurality of mode switching events has occurred. Here, the predetermined key input may include a short press input or a long press input for at least one of a direction input, a selection input 645, and a return input 646.

The remote control device may output the direction input if a physical input is applied to the direction button. If a physical input to the selection button is applied, the remote control device may output a selection input 645. If a physical input to the restore button is applied, the remote control device may output a return input 646. Meanwhile, the direction input may be divided into a long press direction input 644 and a short press direction input according to the time when the physical input is applied. The direction input when the physical input is applied for, e.g., 500 ms or more may be provided as the long press direction input 644, but the direction input when the physical input is applied for less than 500 ms may be provided as the short press direction input.

When receiving the selection input 645 while being maintained in the link navigation mode 602, the display device may switch the navigation mode to the scroll navigation mode. Further, when the display device receives the return input 646 while being maintained in the link navigation mode 602, the navigation mode may be switched to the cursor navigation mode 601.

Further, when the display device receives the selection input 645 while being maintained in the scroll navigation mode 603, the navigation mode may be switched to the cursor navigation mode 601. When receiving a return input 646 while being maintained in the scroll navigation mode 603, the display device may switch the navigation mode to the link navigation mode 602.

Further, when the display device receives the long press direction input 644 while being maintained in the cursor navigation mode 601, the navigation mode may be switched to link navigation. When receiving the selection input 645 while being maintained in the cursor navigation mode 601, the display device may switch the navigation mode to the scroll mode.

Meanwhile, the selection input 645, the return input 646, and the selection input 645 in the various embodiments described with reference to FIG. 6 may be replaced with different key inputs, and various embodiments of the disclosure are not limited as being implemented only through the key input. For example, the selection input 645 may be understood as a first input, the return input 646 as a second input, and the direction input as a third input, and the first to third inputs may be generated in response to physical inputs to other key buttons of the remote control device.

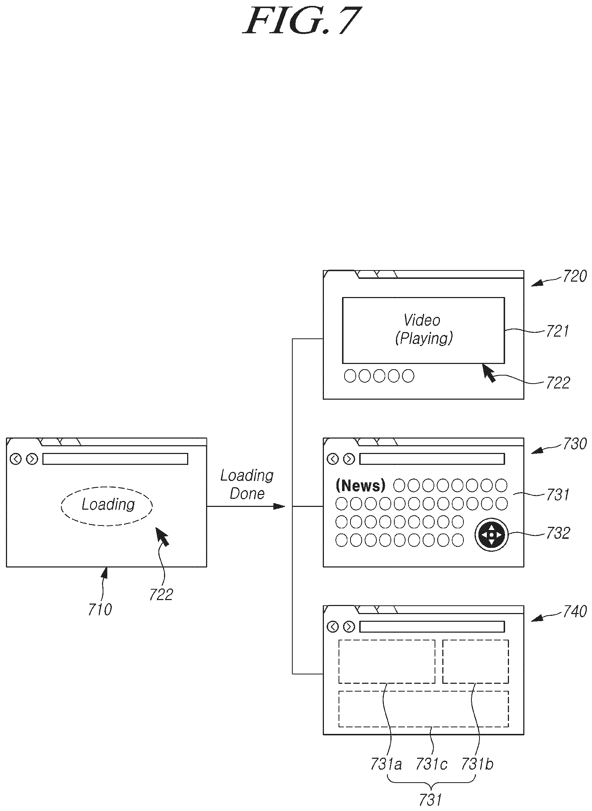

FIG. 7 is a reference view illustrating various navigation mode settings.

Referring to FIG. 7, while the webpage is loading, the display device (10 of FIGS. 1 and 2) may operate in the cursor navigation mode. In this case, the display device may display the cursor 722 on the loading screen 710.

If the loading of the webpages 720, 730, and 740 is completed, the display device may operate in various navigation modes according to the type of web content (e.g., video 721 and article 731) constituting the webpage. Further, when the video 721 is included as web content, the display device may operate in the cursor navigation mode or another navigation mode depending on the playback state of the video 721.

For example, the webpage 720 may include a video 721, and when the video 721 is being played, the display device operates in the cursor navigation mode. In this case, the display device may display a cursor 722 for selecting a reactive option constituting the webpage 720. The cursor 722 may be moved up/down/left/right according to direction information of the four-key input received from the remote control device. Although not limited thereto, the reactive option to be selected by the cursor 722 may be at least some of the interaction elements having a predetermined level or lower, or the lowest level in the DOM tree.

For example, the webpage 730 may include an article 731, and while the article 731 is output, the display device operates in the scroll navigation mode. In this case, the display device may display an icon 732 for indicating that the scroll navigation mode is enabled. The display device may move the view area of the webpage 730 displayed on the display according to direction information of the four-key input received from the remote control device.

For example, the webpage 740 may be a default webpage that does not include the article 731 and the video 721 being played. In this case, the display device operates in the link navigation mode. The default webpage may include a plurality of interaction elements 731; 731a, 731b, 731c. For example, if a four-key input associated with the right direction is received while the focus is applied to the first interaction element 731a, the display device may move the focus from the first interaction element 731a to the second interaction element 731b. For example, if a four-key input associated with the lower direction is received while the focus is applied to the first interaction element 731a, the display device may move the focus from the first interaction element 731a to the third interaction element 731c. For example, if a four-key input associated with the lower direction is received while the focus is applied to the second interaction element 731b, the display device may move the focus from the second interaction element 731b to the third interaction element 731c.

The interaction elements 731 may be divided into parent interaction elements and child interaction elements, and the hierarchical relationship between the interaction elements may be divided based on the Dom tree. If a selection input to an parent interaction element is applied, focus movement between the child interaction elements becomes possible.

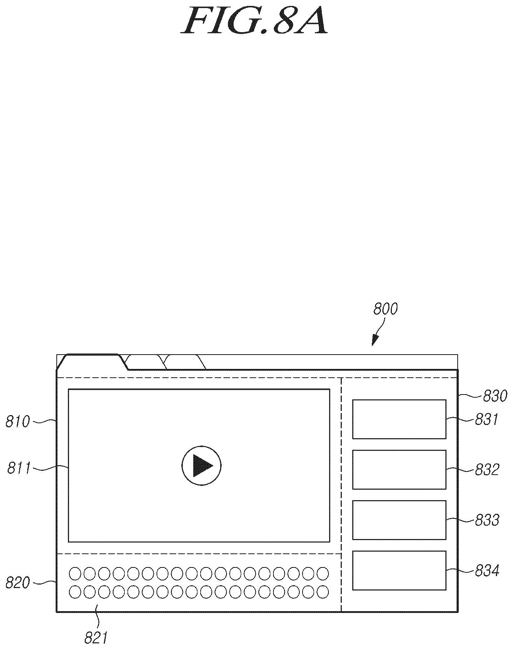

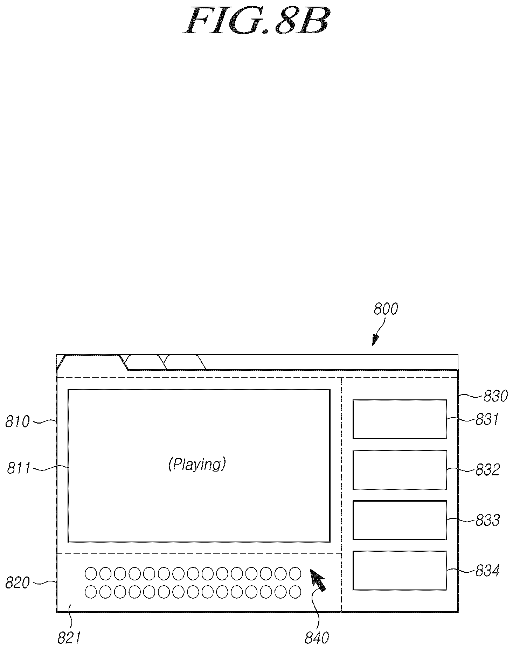

FIGS. 8A and 8B are reference views illustrating a navigation mode setting according to a video execution state.

FIGS. 8A and 8B illustrate a case in which a video is executed while being maintained in the link navigation mode, and various embodiments of the disclosure are not limited thereto.

Referring to FIGS. 8A and 8B, a webpage 800 includes a plurality of interaction elements 810, 820, and 830. Further, at least one (e.g., the interaction element 830) of the interaction elements may include child interaction elements 831, 832, 833, and 834 according to the Dom tree. FIG. 8 exemplarily illustrates a case where a video is represented on the interaction element 810, text is represented on the interaction element 820, and a plurality of preview images are represented on the interaction element 830.

Referring to FIG. 8A, the navigation mode before the video 811 is executed is set as the link navigation mode. While being maintained in the link navigation mode, the display device may move the focus between the interaction elements 810, 820, and 830 based on the direction information of the received four-key input. Further, if a selection input to the interactive element 830 is applied, focus movement between the child interactive elements 831, 832, 833, and 834 becomes possible. Further, although not limited thereto, the display device may play the video 811 included in the interactive element 810 if a selection input to the interactive element 810 is received.

Referring to FIG. 8B, while the video 811 is being played, the navigation mode is switched from the link navigation mode to the cursor navigation mode. While being maintained in the cursor navigation mode, the display device may move the cursor 840 based on the direction information of the received four-key input. If the cursor 840 receives a selection input to at least some of the interaction elements (e.g., the child interaction elements 831, 832, 833, and 834, or the video 811), the display device may perform an execution operation associated with the selected interaction element.

The electronic device according to various embodiments may be one of various types of electronic devices. The electronic devices may include, for example, a display device, a portable communication device (e.g., a smartphone), a computer device, a portable multimedia device, a portable medical device, a camera, a wearable device, or a home appliance. The electronic devices according to an embodiment are not limited to those described above.

It should be appreciated that various embodiments of the disclosure and the terms used therein are not intended to limit the technological features set forth herein to particular embodiments, and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. In the disclosure, each of such phrases as "A or B," "at least one of A and B," "at least one of A or B," "A, B, or C," "at least one of A, B, and C," and "at least one of A, B, or C," may include any one of the items listed along with the corresponding phrase, or all possible combinations of those. Such terms as "1st", "2nd," or "first" or "second" may be used to simply distinguish a corresponding component from another, and does not limit the components in other aspect (e.g., importance or order).

As used herein, the term "unit" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, "unit" or "module" may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the display device 100 and the remote control device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). The computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A method for navigating a webpage on a display device, comprising:
displaying the webpage through a web browser;
setting a navigation mode as any one of a plurality of navigation modes based on at least one of a loading state of the webpage and a hypertext markup language (HTML) element of the webpage; and
navigating a graphic user interface (GUI) on the webpage based on the set navigation mode and direction information in response to receiving a control signal having the direction information from an external device.

2. The method of claim 1, wherein the direction information is identified based on a frequency value of the control signal, and
wherein the control signal is an electromagnetic wave in an infrared or near-infrared band.

3. The method of claim 1, wherein the plurality of navigation modes include two or more of a cursor navigation mode, a link navigation mode, or a scroll navigation mode.

4. The method of claim 3, wherein the set navigation mode is maintained as the cursor navigation mode while the webpage is being loaded.

5. The method of claim 4, wherein the set navigation mode is switched from the cursor navigation mode to the link navigation mode based on loading of the webpage being completed.

6. The method of claim 3, further comprising:
identifying a type of one or more web contents included in the webpage from the HTML element; and
setting the navigation mode as any one of the cursor navigation mode, the link navigation mode, or the scroll navigation mode, based on the type of the one or more web contents.

7. The method of claim 6, wherein the navigation mode is set as the scroll navigation mode, based on the type of the one or more web contents being an article.

8. The method of claim 6, wherein the navigation mode is set as the cursor navigation mode, based on the type of the one or more web contents being a video and the video being identified as being played back.

9. The method of claim 8, wherein the navigation mode is set as the cursor navigation mode while playback of the video is maintained, and the navigation mode is restored to a previous navigation mode based on playback of the video being terminated, and
wherein the previous navigation mode is a navigation mode, among the plurality of navigation modes, prior to the cursor navigation mode being set.

10. The method of claim 6, wherein the navigation mode is set as the link navigation mode, based on the type of the one or more web contents being an article and a video, and
wherein the navigation mode is switched from the link navigation mode to the cursor navigation mode, based on the video being identified as being played back.

11. A method for navigating a webpage of a display device, comprising:
displaying a webpage through a web browser;
setting a navigation mode as any one of a plurality of navigation modes, based on at least one of a loading state of the webpage, a hypertext markup language (HTML) element of the webpage, and a playback state of a video included in a webpage; and
navigating a graphic user interface (GUI) on the webpage, based on direction information and the set navigation mode, in response to receiving a control signal having the direction information from an external device.

12. The method of claim 11, wherein the direction information is identified based on a frequency value of the control signal, and
wherein the control signal is an electromagnetic wave in an infrared or near-infrared band.

13. The method of claim 11, wherein the plurality of navigation modes include two or more of a cursor navigation mode, a link navigation mode, or a scroll navigation mode.

14. A display device comprising:
one or more processors; and
memory storing a program executed by the one or more processors, wherein the program includes one or more instructions for executing:
displaying a webpage through a web browser,
setting a navigation mode as any one of a plurality of navigation modes, based on at least one of a loading state of the webpage and a hypertext markup language (HTML) element of the webpage, and
navigating a graphic user interface (GUI) on the webpage, based on direction information and the set navigation mode, in response to receiving a control signal having the direction information from an external device.

15. A display device, comprising one or more processors and memory storing a program executed by the one or more processors, wherein the program includes one or more instructions for executing the method of any one of claims 2 to 13.
